# EUROPEAN PATENT APPLICATION

(11) **EP 4 835 784 A1**
(43) Date of publication of application: **04.11.2026**
(21) Application number: 24910418.3
(22) Date of filing: 20.11.2024
(51) Int. Cl.: G06Q 20/40

(54) **METHOD AND APPARATUS FOR MANAGING DIGITAL CURRENCY HARDWARE WALLET**

(30) Priority: 29.12.2023 CN 202311862879
(71) Applicant: Digital Currency Institute, The People's Bank of China, Beijing 100073 (CN)
(72) Inventor: MU, Changchun, Beijing 100071 (CN); DI, Gang, Beijing 100071 (CN); LYU, Yuan, Beijing 100071 (CN); PENG, Meiling, Beijing 100071 (CN); BIAN, Yongchao, Beijing 100071 (CN); HU, Qiang, Beijing 100071 (CN); PENG, Chenyi, Beijing 100071 (CN); LIU, Gang, Beijing 100071 (CN); FAN, Yaqi, Beijing 100071 (CN); LIANG, Wei, Beijing 100071 (CN); YAN, Jianli, Beijing 100071 (CN); CUI, Peidong, Beijing 100071 (CN); CHEN, Song, Beijing 100071 (CN); WANG, Rongbing, Beijing 100071 (CN)
(74) Representative: Epping - Hermann - Fischer
(86) International application number: PCT/CN2024/133311
(87) International publication number: WO 2025/139484

(57) **Abstract**

The present disclosure relates to the technical field of computers. Disclosed are a method and apparatus for managing a digital currency hardware wallet. A specific embodiment of the method comprises: in response to a management request for a digital currency hardware wallet, establishing a communication connection with a subscriber identity module, and acquiring first hardware wallet information corresponding to the subscriber identity module; comparing the first hardware wallet information with second hardware wallet information displayed on a digital currency application page, so as to perform account information verification; and when the account information verification is passed, entering a hardware wallet function management page, and managing a second hardware wallet by means of the hardware wallet function management page. The embodiment performs account consistency verification and management on a hardware wallet on the basis of information related to a hardware carrier subscriber identity module of a digital currency hardware wallet, thereby simplifying the mode for managing the digital currency hardware wallet and improving the security of managing and using the hardware wallet.

## Description

This application claims the priority to Chinese Patent Application No.202311862879.6, titled "METHOD AND APPARATUS FOR MANAGING DIGITAL CURRENCY HARDWARE WALLET", filed on December 29, 2023 with the China National Intellectual Property Administration, which is incorporated herein by reference in its entirety.

### FIELD

The present disclosure relates to the technical field of computers, and in particular to a digital-currency hardware-wallet management method and apparatus.

### BACKGROUND

Existing management of a digital-currency hardware wallet involves the management of a payment limit of a software wallet that can be used by the hardware carrier of the digital-currency hardware wallet, as well as related basic capabilities such as password management and device removal. Since the hardware carrier itself of the digital-currency hardware wallet does not include real-name information, the management can only be performed through performing association based on the number of the hardware carrier.

During the implementation of the present disclosure, it is found that, in the conventional technology, the digital-currency hardware wallet cannot be directly managed based on the related information of the hardware carrier of the digital-currency hardware wallet, rendering the management of the digital-currency hardware wallet being relatively complicated and security being relatively low in the management and use of the digital-currency hardware wallet.

### SUMMARY

In view of this, a digital-currency hardware-wallet management method and apparatus are provided according to embodiments of the present disclosure, which can perform account-consistency verification and management on the digital-currency hardware wallet based on the related information of a user identification card used as a hardware carrier of the digital-currency hardware wallet, thereby simplifying the digital-currency hardware-wallet management and improving the security in management and use of the hardware wallet.

To achieve the objective described above, according to an aspect of the embodiment of the present disclosure, a digital-currency hardware-wallet management method is provided, and the method includes: in response to a digital-currency hardware-wallet management request, establishing a communication connection with a user identification card, and acquiring first hardware-wallet information corresponding to the user identification card; performing account-information verification by comparing the first hardware-wallet information with second hardware-wallet information displayed on a page of a digital-currency application; and in response to the account-information verification being passed, accessing a hardware-wallet function management page, and managing a second hardware wallet corresponding to the second hardware-wallet information through the hardware-wallet function management page.

In an embodiment, the first hardware-wallet information includes a first hardware-wallet identifier and first hardware-wallet real-name information, and the second hardware-wallet information includes a second hardware-wallet identifier and second hardware-wallet real-name information; the performing account-information verification by comparing the first hardware-wallet information with second hardware-wallet information displayed on a page of a digital-currency application includes: determining whether the first hardware-wallet identifier is consistent with the second hardware-wallet identifier; in response to the first hardware-wallet identifier being consistent with the second hardware-wallet identifier, determining the account-information verification as being passed; in response to the first hardware-wallet identifier being inconsistent with the second hardware-wallet identifier, determining whether the first hardware-wallet real-name information is consistent with the second hardware-wallet real-name information; in response to the first hardware-wallet real-name information being consistent with the second hardware-wallet real-name information, determining an account-information verification result to be that the user identification card corresponding to the second hardware wallet has been replaced and the second hardware-wallet real-name information remains unchanged; in response to the first hardware-wallet real-name information being inconsistent with the second hardware-wallet real-name information, determining whether the first hardware-wallet real-name information has an affiliation relationship with the second hardware-wallet real-name information; in response to the first hardware-wallet real-name information having the affiliation relationship with the second hardware-wallet real-name information, determining the account-information verification as being passed; and in response to the first hardware-wallet real-name information not having the affiliation relationship with the second hardware-wallet real-name information, determining the account-information verification result to be that the second hardware-wallet is logged in with a replaced device.

In an embodiment, the method further includes: in response to the account-information verification result being that the user identification card corresponding to the second hardware-wallet has been replaced and the second hardware-wallet real-name information remains unchanged, prompting a user to delete the second hardware-wallet.

In an embodiment, the method further includes: in response to receiving an instruction of deleting the second hardware wallet, acquiring payment information of the second hardware wallet for verification; and sending, in response to the verification being passed, a request for deleting the second hardware wallet to a wallet issuing institution to delete the second hardware wallet through the wallet issuing institution.

In an embodiment, the method further includes: in response to the account-information verification result being that the second hardware wallet is logged in with a replaced device, determining whether a small-amount password-free payment function of the second hardware wallet is enabled; and in response to determining that the small-amount password-free payment function of the second hardware wallet is enabled, prompting a user to disable the small-amount password-free payment function of the second hardware wallet.

In an embodiment, the method further includes: sending, in response to receiving an instruction of disabling the small-amount password-free payment function of the second hardware wallet, a request for disabling the small-amount password-free payment function to a wallet issuing institution to disable the small-amount password-free payment function of the second hardware wallet through the wallet issuing institution.

In an embodiment, after the prompting a user to disable the small-amount password-free payment function of the second hardware wallet, the method further includes: accessing the hardware-wallet function management page, and managing the second hardware wallet through the hardware-wallet function management page.

In an embodiment, before accessing the hardware-wallet function management page, the method further includes: checking whether a mandatory update of the digital-currency application is available via a trusted service manager; and in response to the mandatory update of the digital-currency application being available, prompting a user to perform application updating and confirming that the digital-currency application has been updated successfully.

In an embodiment, the managing the second hardware wallet through the hardware-wallet function management page includes: managing the second hardware wallet through the hardware-wallet function management page to performing one or more of the following operations: payment limit setting, password management, hardware-wallet name modification, hardware-wallet loss reporting and loss-report cancellation function, and hardware-wallet deletion.

In an embodiment, the establishing a communication connection with a user identification card includes: performing, for a first type of operating system, command communication with the user identification card through an open mobile interface of a device-card channel of the operating system to establish the communication connection; and performing, for a second type of operating system, command communication with the user identification card through a Bluetooth channel protocol provided by an operator to establish the communication connection.

In an embodiment, the method further includes: for the second type of operating system, determining, in response to failing to establish a communication connection with the user identification card, the account-information verification result to be that the second hardware wallet is logged in with a replaced device.

According to another aspect of the embodiment of the present disclosure, a digital-currency hardware-wallet management apparatus is provided, and the apparatus includes: a connection establishment module, configured to, in response to a digital-currency hardware-wallet management request, establish a communication connection with a user identification card, and acquire first hardware-wallet information corresponding to the user identification card; an information verification module, configured to perform account-information verification by comparing the first hardware-wallet information with second hardware-wallet information displayed on a page of a digital-currency application; and a wallet management module, configured to, in response to the account-information verification being passed, access a hardware-wallet function management page, and manage a second hardware wallet corresponding to the second hardware-wallet information through the hardware-wallet function management page.

According to another aspect of the embodiment of the present disclosure, an electronic device is provided, and the electronic device includes: one or more processors; a storage apparatus, configured to store one or more programs, where the one or more programs, when executed by the one or more processors, cause the one or more processors to implement the digital-currency hardware-wallet management method provided in the embodiment of the present disclosure.

According to another aspect of the embodiment of the present disclosure, a computer-readable medium is provided. The computer-readable medium has a computer program stored thereon, where the program, when executed by a processor, performs the digital-currency hardware-wallet management method provided in the embodiment of the present disclosure.

The embodiment of the present disclosure has the following advantages or beneficial effects: a communication connection is established with a user identification card, in response to a digital-currency hardware-wallet management, and first hardware-wallet information corresponding to the user identification card is acquired; the first hardware-wallet information is compared with second hardware-wallet information displayed on a page of a digital-currency application to perform account-information verification; and in response to the account-information verification being passed, a hardware-wallet function management page is accessed, and a second hardware wallet corresponding to the second hardware-wallet information is managed through the hardware-wallet function management page. The embodiment performs account-consistency verification and management on a hardware wallet on the basis of information related to a user identification card used as a hardware carrier of a digital-currency hardware wallet, thereby simplifying the manner for managing the digital-currency hardware wallet and improving the security of managing and using the hardware wallet.

Further effects of the above-mentioned non-conventional alternations are described below in conjunction with specific implementations.

### BRIEF DESCRIPTION OF THE DRAWINGS

The accompanying drawings are provided for a better understanding of the present disclosure and do not constitute an improper limitation of the present disclosure, where,
FIG. 1 is a schematic diagram of main steps of a digital-currency hardware-wallet management method according to an embodiment of the present disclosure;
FIG. 2 is a schematic diagram illustrating a principle for establishing a communication connection with a subscriber identity module (SIM) card according to an embodiment of the present disclosure;
FIG. 3 is a schematic diagram illustrating an implementation process of hardware-wallet management according to an embodiment of the present disclosure;
FIG. 4 is a schematic diagram of main modules of a digital-currency hardware-wallet management apparatus according to an embodiment of the present disclosure;
FIG. 5 is an exemplary system architecture diagram in which an embodiment of the present disclosure may be applied; and
FIG. 6 is a schematic structural diagram of a computer system of a terminal device or server suitable for implementing an embodiment of the present disclosure.

### DETAILED DESCRIPTION

Exemplary embodiments of the present disclosure are described below in connection with the accompanying drawings. In the following description, various details of the embodiments of the present disclosure are included to aid in understanding, and they should be considered as being merely exemplary. Therefore, those of ordinary skill in the art should understand that various changes and modifications can be made to the embodiments described herein without departing from the scope and spirit of the present disclosure. Similarly, descriptions of well-known functions and constructions are omitted from the following description, for clarity and conciseness.

It should be noted that in the technical solution disclosed in the present disclosure, all aspects related to the collection, acquisition, updating, analysis, processing, use, transmission, and storage of personal information of users comply with relevant laws and regulations, are used for lawful purposes, and do not violate public order or good morals. Necessary measures are taken to protect personal information of users from unauthorized access, thereby safeguarding the security of personal information of users, network security, and national security.

To directly manage a digital-currency hardware wallet based on a hardware carrier of the digital-currency hardware wallet, a personal digital-currency software wallet is associated with a user identification card (i.e. a Subscriber Identification Module card, SIM card) in the present disclosure to write hardware-wallet information into the SIM card. When creating the digital-currency hardware wallet, the real-name information of the personal digital-currency software wallet is compared with the real-name information of the operator SIM card to determine whether the two pieces of real-name information are consistent. If the two pieces of real-name information are consistent, the creation can be continued. In addition, a SIM-card hardware wallet can be created on different types of operating systems (for example, Android system, iOS system, or the like). For different types of operating systems, the SIM card can be accessed by establishing a connection with SIM card, thereby writing data information (such as card application files, personalization data, key information, or the like) related to the hardware wallet into the SIM card. When being used, the SIM card is inserted into an identification terminal, such as a mobile phone, capable of identifying the user identification card, and digital-currency payment can be completed by tapping a receipt terminal.

In an embodiment of the present disclosure, the digital currency may be, for example, digital china yuan (e-CNY). A digital-currency software wallet refers to a digital wallet installed on a mobile device such as a mobile phone, while a digital-currency hardware wallet refers to a wallet is stored and managed using a physical device. The digital-currency hardware wallet is a sub-wallet of the digital-currency software wallet. In the embodiment of the present disclosure, a software wallet refers to a digital-currency software wallet, and a hardware wallet refers to a digital-currency hardware wallet.

Since the SIM card inherently carries real-name information, consistency between a digital-currency account and a SIM-card account has been verified when the user creates the SIM-card hardware wallet, in subsequent management of the hardware wallet, it is possible to verify whether the hardware wallet is logged in on a different device, or whether the SIM card used as the hardware carrier is replaced without updating the real-name information (for example, the mobile phone number), thereby enhancing the security in the management and use of the digital-currency hardware wallet.

Accordingly, a digital-currency hardware-wallet management method is provided in the present disclosure. The method is essentially a digital-currency hardware-wallet management method that is based on a SIM card. The SIM-card hardware wallet is managed through a digital-currency application (APP) installed on an identification device (for example, a mobile phone or a smart watch) of the SIM card. Different types of operating systems (for example, Android system and iOS system) may implement the management function based on different technical solutions. The Android system performs command communication with the SIM card through an open mobile application programming interface (OPEN MOBILE API, OMA) of a device-card channel to manage the hardware wallet, and the iOS system performs command communication with a Bluetooth SIM card through a Bluetooth channel protocol provided by an operator to manage the hardware wallet. When a user checks or manages the SIM-card hardware wallet through the digital-currency APP, the user may perform basic management operations, including payment limit setting, password management, name modification, creation and deletion, as well as account-consistency management.

In the embodiment of the present disclosure, the management function of the SIM-card hardware wallet mainly includes three parts: management on access of the digital-currency APP to the SIM card, management on consistency verification between the digital-currency hardware wallet account and the hardware-wallet account on the SIM card, and basic function management of the hardware wallet.

The first part involves management on access of the digital-currency APP to the SIM card. For different types of operating systems, different methods may be adopted for establishing a communication connection between the digital-currency APP and the user identification card, e.g. the SIM card. For example, if the operating system is the Android system, the APP performs command communication with the SIM card via the OMA of the device-card channel of the phone system; if the operating system is the iOS system, the APP is required to pair with a Bluetooth SIM card (a SIM card in which a Bluetooth module is installed) and performs command communication with the Bluetooth SIM card through a Bluetooth channel protocol provided by the operator.

The second part involves management on the consistency verification between the digital-currency hardware-wallet account and the SIM-card hardware-wallet account. When checking and managing a created SIM-card hardware wallet in the digital-currency APP on a SIM-card identification device (a mobile phone is used as an example in the embodiment of the present disclosure), it is necessary to first check in the background whether the hardware wallet is in a normal state. If the hardware wallet is in the normal state, it is continued to access a hardware-wallet function management page. Before accessing the hardware-wallet function management page, it is necessary to determine whether the hardware wallet is created in the current SIM card, whether the user identification card has been replaced without changing the real-name information, or whether the hardware wallet is logged in with a different device. Here, when the hardware wallet has been associated with a replaced user identification card with the real-name information remaining unchanged, or is logged in with a different device, the user will be guided to perform related operations such as disabling a small-amount password-free payment function or deleting the hardware wallet. When the hardware wallet is created in the current SIM card, it is further required to check, in a Trusted Service Manager (TSM), whether an application update is available.

The third part involves basic function management of the hardware wallet. After accessing the hardware-wallet function management page, basic function management may be performed on the hardware wallet, including payment limit setting, password management, hardware-wallet name modification, hardware-wallet loss reporting and loss-report cancellation function, and device removal. Device removal refers to deleting hardware-wallet data from the SIM card, and after the device is removed, the hardware wallet may be created again.

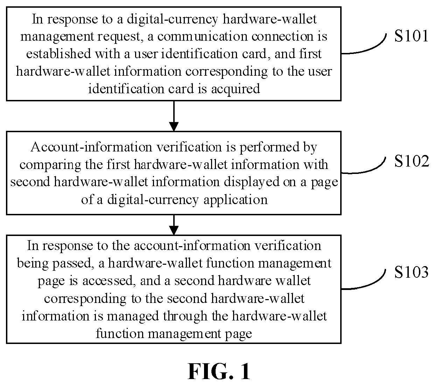

FIG. 1 is a schematic diagram of main steps of a digital-currency hardware-wallet management method according to an embodiment of the present disclosure. As shown in FIG. 1, the digital-currency hardware-wallet management method according to the embodiment of the present disclosure mainly includes step S101 to step S103 as follows.

In step S101, in response to a digital-currency hardware-wallet management request, a communication connection is established with a user identification card, and first hardware-wallet information corresponding to the user identification card is acquired. After a user initiates a digital-currency hardware-wallet management request through a digital-currency application (APP) on a SIM-card identification terminal (for example, a mobile phone), the APP (in the embodiment of the present disclosure, the APP refers to the digital-currency APP) on the SIM-card identification terminal is required to first connect to the SIM card, for performing subsequent consistency verification.

According to an embodiment of the present disclosure, establishing a communication connection with the user identification card may include: performing, for a first type of operating system, command communication with the user identification card through an open mobile interface of a device-card channel of the operating system to establish the communication connection; and performing, for a second type of operating system, command communication with the user identification card through a Bluetooth channel protocol provided by an operator to establish the communication connection. Here, the first type of operating system may be, for example, an Android system, and the second type of operating system may be, for example, an iOS system.

If the operating system is the Android system, the APP performs command communication with the SIM card via the OMA of the device-card channel of the operating system. If the operating system is the iOS system, the APP is required to pair with a Bluetooth SIM card to perform command communication through a Bluetooth channel protocol provided by the operator. In an embodiment, the user first initiates a Bluetooth search request on the APP, selects the Bluetooth SIM card to be connected, and inputs a Bluetooth pairing code for verification, so as to establish a connection between the APP and the SIM card. If it is a first-time pairing, the pairing code is required to be entered. If the user reconnects to a previously paired Bluetooth SIM card, it is not required to enter the pairing code again. In addition, it is required to support handling of various abnormal situations that may occur when connecting to the SIM card.

After the communication connection is established with the user identification card (e.g. the SIM card), first hardware-wallet information corresponding to the user identification card (e.g. the SIM card) can be acquired. It should be noted that one SIM card can only correspond to one hardware wallet and related information thereof.

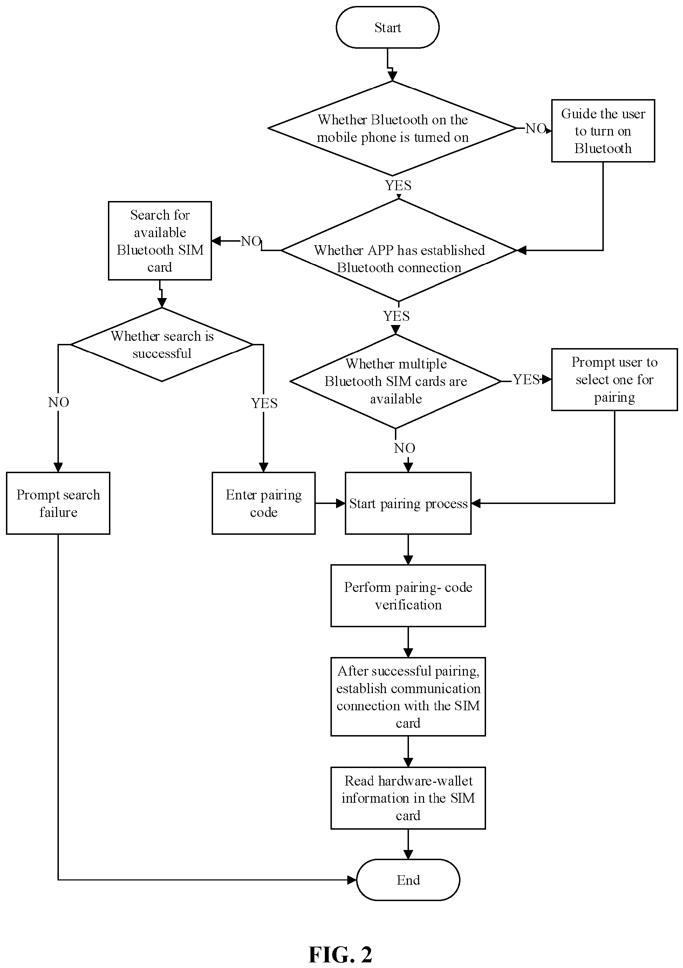

FIG. 2 is a schematic diagram illustrating a principle of establishing a communication connection with a SIM card according to an embodiment of the present disclosure. As shown in FIG. 2, in the embodiment of the present disclosure, an implementation process is illustrated in an iOS system for establishing a communication connection between the digital-currency APP on a current mobile phone device and the SIM card when the user creates or checks a hardware wallet in the SIM card. First, it is determined whether Bluetooth on the mobile phone is turned on. If Bluetooth is not turned on, the user is guided to turn on the Bluetooth. Thereafter, it is determined whether the APP has already established a Bluetooth connection. If the Bluetooth connection has been established, it is further determined whether multiple Bluetooth SIM cards are available. If multiple Bluetooth SIM cards are available, the user is prompted to select one of them for pairing; otherwise, it directly proceeds to perform pairing. If the Bluetooth connection has not been established, an available Bluetooth SIM card is searched for. If the available Bluetooth SIM card is retrieved, a pairing code is entered and the pairing will be performed; otherwise, a search-failure prompt is presented. Upon starting the pairing, pairing-code verification is performed, and upon successful pairing, a communication connection with the SIM card is established. Thereafter, hardware-wallet information in the SIM card can be read.

According to another embodiment of the present disclosure, the digital-currency hardware-wallet management method further includes: for the second type of operating system, determining, in response to failing to establish a communication connection with the user identification card, an account-information verification result to be that a second hardware wallet is logged in with a replaced device. For the iOS system, when the APP is establishing a Bluetooth connection with the SIM card, if Bluetooth pairing fails, including a failure to retrieve a Bluetooth SIM card, an incorrect pairing code, or a pairing timeout, it is determined that the second hardware wallet is logged in with a replaced device, and the user is prompted to disable the small-amount password-free payment function.

In step S102, account-information verification is performed by comparing the first hardware-wallet information with second hardware-wallet information displayed on a page of a digital-currency application.

According to an embodiment of the present disclosure, the first hardware-wallet information includes a first hardware-wallet identifier and first hardware-wallet real-name information, and the second hardware-wallet information includes a second hardware-wallet identifier and second hardware-wallet real-name information. A hardware-wallet identifier may, for example, be a hardware-wallet number or other information capable of uniquely identifying the hardware wallet.

The performing account-information verification by comparing the first hardware-wallet information with second hardware-wallet information displayed on a page of a digital-currency application may include: in response to the first hardware wallet identifier being consistent with the second hardware wallet identifier, determining whether the first hardware wallet identifier is consistent with the second hardware wallet identifier; determining the account-information verification as being passed; in response to the first hardware wallet identifier being inconsistent with the second hardware wallet identifier, determining whether the first hardware-wallet real-name information is consistent with the second hardware-wallet real-name information; in response to the first hardware-wallet real-name information being consistent with the second hardware-wallet real-name information, determining an account-information verification result to be that a user identification card corresponding to a second hardware wallet replaced and the second hardware-wallet real-name information remains unchanged; in response to the first hardware-wallet real-name information being inconsistent with the second hardware-wallet real-name information, determining whether the first hardware-wallet real-name information has an affiliation relationship with the second hardware-wallet real-name information; in response to the first hardware-wallet real-name information having the affiliation relationship with the second hardware-wallet real-name information, determining the account information verification as being passed; and in response to the first hardware-wallet real-name information not having the affiliation relationship with the second hardware-wallet real-name information, determining that the account-information verification result is that the second hardware wallet is logged in with a replaced device.

After the communication connection is established with the SIM card, hardware-wallet information in the SIM card can be read. Further, by determining whether the first hardware-wallet identifier is consistent with the second hardware-wallet identifier, it is determined whether the second hardware wallet displayed on the digital-currency APP page is consistent with a first hardware wallet on the SIM card. If the second hardware wallet displayed on the digital-currency APP page is consistent with the first hardware wallet on the SIM card, it indicates that the second hardware wallet is the first hardware wallet on the SIM card, the account-information verification is passed, and step S103 can be directly performed to perform subsequent management operations on the second hardware wallet or the first hardware wallet. If the second hardware wallet displayed on the digital-currency APP page is inconsistent with the first hardware wallet on the SIM card, it is required to further determine whether the user identification card corresponding to the second hardware wallet has been replaced and the second hardware-wallet real-name information remains unchanged, or whether the second hardware wallet is logged in on a different device. Here, when the first hardware-wallet real-name information (for example, a mobile phone number) and the second hardware-wallet real-name information (for example, a mobile phone number) have an affiliation relationship, the account-information verification is passed.

In step S103, in response to the account-information verification being passed, a hardware-wallet function management page is accessed, and a second hardware wallet corresponding to the second hardware-wallet information is managed through the hardware-wallet function management page.

According to an embodiment of the present disclosure, managing the second hardware wallet through the hardware-wallet function management page may include: managing the second hardware wallet through the hardware-wallet function management page to perform one or more of the following operations: payment limit setting, password management, hardware-wallet name modification, hardware-wallet loss reporting and loss-report cancellation function, and hardware-wallet deletion.

In an embodiment, the payment limit setting is performed through a provided function for adjusting the payment limit for the SIM-card hardware wallet, including: a single-payment limit, a daily-cumulative-payment limit, and an annually-cumulative-payment limit. The password management is performed through a provided function for modifying or resetting the payment password of the SIM-card hardware wallet. The hardware-wallet name modification refers to a function for changing a default name generated when the SIM-card hardware wallet is created. For the hardware-wallet loss reporting and loss-report cancellation function, it can issue a loss reporting of the hardware wallet when the SIM card used as the hardware carrier is lost; after the loss reporting is issued, the hardware wallet cannot be used until the SIM card used as the hardware carrier is retrieved, and then the loss-report cancellation is performed. The loss reporting of the SIM-card hardware wallet can be issued independently. The hardware-wallet deletion refers to deleting the hardware-wallet data in the SIM card, such that the APP backend sets the wallet as a lost state, and removing the application data in the SIM card, such that the SIM card no longer has digital-currency payment capability until hardware-wallet data is re-written to the SIM card.

According to an embodiment of the present disclosure, before accessing the hardware-wallet function management page, the method further includes: checking whether a mandatory update of the digital-currency application is available via the TSM; and in response to the mandatory update of the digital-currency application being available, prompting a user to update the digital-currency application and confirming that the digital-currency application is updated successfully. In an embodiment, whether an application update is available is checked via the TSM. If a mandatory update is available, a pop-up prompts the user to perform the mandatory update. If the mandatory update is not performed, the user cannot access the hardware-wallet function management page. If the mandatory update is selected, the updating is performed, and the hardware wallet function management page is accessed upon successful updating.

According to an embodiment of the present disclosure, in response to the account-information verification result being that the user identification card corresponding to the second hardware wallet has been replaced and the second hardware-wallet real-name information remains unchanged, the user is prompted to delete the second hardware wallet. In this case, it indicates that the SIM card used as the hardware carrier of the second hardware wallet has been changed, while the corresponding real-name information (for example, a mobile phone number) remains unchanged, which may occur when the hardware carrier is lost and subsequently replaced. In this condition, the user is prompted to delete the hardware wallet on the original SIM card used as the hardware carrier, namely, the second hardware wallet displayed on the APP page.

According to another embodiment of the present disclosure, the digital-currency hardware-wallet management method may further include: in response to receiving an instruction of deleting the second hardware wallet, acquiring payment information of the second hardware wallet for verification; and sending, in response to the verification being passed, a request for deleting the second hardware wallet to a wallet issuing institution to delete the second hardware wallet through the wallet issuing institution. When it is required to delete the second hardware wallet, payment-information verification is first performed, for example, based on the payment password. Upon successful verification, the request for deleting the second hardware wallet may be sent to the wallet issuing institution so that the second hardware wallet can be deleted by the wallet issuing institution. After being deleted, the second hardware wallet can no longer be used.

According to another embodiment of the present disclosure, the digital-currency hardware-wallet management method may further include: in response to the account-information verification result is that the second hardware wallet is logged in with a replaced device, determining whether a small-amount password-free payment function of the second hardware wallet is enabled; and in response to the small-amount password-free payment function being enabled for the second hardware wallet, prompting the user to disable the small-amount password-free payment function of the second hardware wallet. When the account-information verification result indicates that the second hardware wallet is logged in with a replaced device, it indicates that the hardware carrier corresponding to the second hardware wallet displayed on the APP page is not on the current device. In this condition, the user may be prompted to disable the small-amount password-free payment function of the second hardware wallet to enhance the payment security of the hardware wallet.

According to another embodiment of the present disclosure, the digital-currency hardware-wallet management method may further include: sending, in response to receiving an instruction of disabling the small-amount password-free payment function of the second hardware wallet, a request for disabling the small-amount password-free payment function to the wallet issuing institution to disable the small-amount password-free payment function of the second hardware wallet through the wallet issuing institution. After the small-amount password-free payment function is disabled, the payment password of the hardware wallet is required to be verified when the hardware wallet is used for payment at a point-of-sale terminal.

According to another embodiment of the present disclosure, after the prompting a user to disable the small-amount password-free payment function of the second hardware wallet, the method further includes: accessing the hardware-wallet function management page, and managing the second hardware wallet through the hardware-wallet function management page. After the small-amount password-free payment function of the hardware wallet is disabled, the hardware-wallet function management page can be accessed, and the second hardware wallet can be managed through the hardware-wallet function management page.

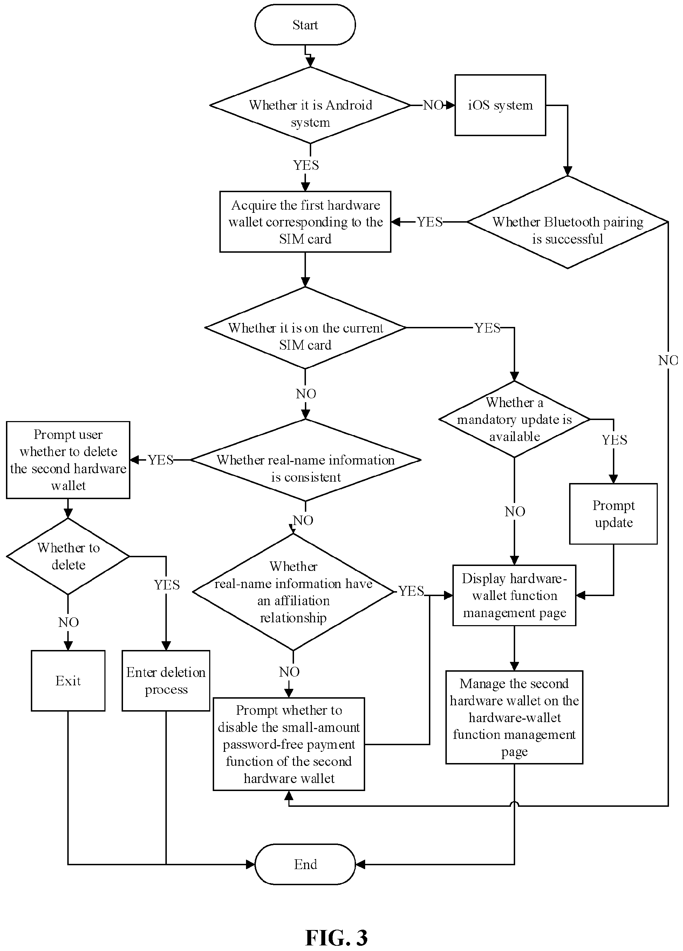

FIG. 3 is a schematic diagram illustrating an implementation process of hardware-wallet management according to an embodiment of the present disclosure. As shown in FIG. 3, in an embodiment of the present disclosure, a main process for hardware-wallet management is as follows. The user determines a second hardware wallet to be managed in the digital-currency APP and clicks the same for management. First, it is determined whether the operating system of the current device is an Android system. If it is an Android system, command communication with the SIM card is performed through the OMA of the device-card channel to establish a communication connection. Then, the first hardware wallet corresponding to the SIM card is obtained, and it is determined whether the second hardware wallet is on the current SIM card (that is, whether the hardware wallet identifier of the second hardware wallet is consistent with the hardware wallet identifier of the first hardware wallet). If the second hardware wallet is on the current SIM card, it is checked whether a mandatory update is available. If the mandatory update is available, prompt is made for performing updating, and upon successful updating, the hardware-wallet function management page is displayed; if no mandatory update is available, the hardware-wallet function management page is displayed. If the second hardware wallet is not on the current SIM card, it is further determined whether the second hardware-wallet real-name information (for example, the corresponding mobile phone number) is consistent with the real-name information of the current SIM card. If the second hardware-wallet real-name information is consistent with the real-name information of the current SIM card, it is prompted that the SIM card corresponding to the second hardware wallet has been replaced and whether to delete the second hardware wallet. If it is determined to delete the second hardware wallet, the deletion process is executed; if it is determined not to delete the second hardware wallet, the process ends. If the second hardware-wallet real-name information is not consistent with the real-name information of the current SIM card, it is further determined whether the second hardware-wallet real-name information has an affiliation relationship with the real-name information of the current SIM card. If so, the hardware-wallet function management page is displayed directly; otherwise, it is prompted whether to disable the small-amount password-free payment function of the second hardware wallet. In this case, regardless of whether the user disables the small-amount password-free payment function, it will always jump to the hardware-wallet function management page. After jumping to the hardware-wallet function management page, the second hardware wallet can be managed on the hardware-wallet function management page, mainly including payment limit setting, password management, hardware-wallet name modification, hardware-wallet loss reporting and loss-report cancellation function, and hardware-wallet deletion.

If the operating system of the current device is not an Android system, it is an iOS system. In this case, command communication with the SIM card is performed through the Bluetooth channel protocol provided by the operator to establish a communication connection. If Bluetooth pairing is successful, the same operations as those in the Android system case are performed. If Bluetooth pairing is not successful, it is prompted whether to disable the small-amount password-free payment function of the second hardware wallet. Regardless of whether the user disables the small-amount password-free payment function, it will always jump to the hardware-wallet function management page.

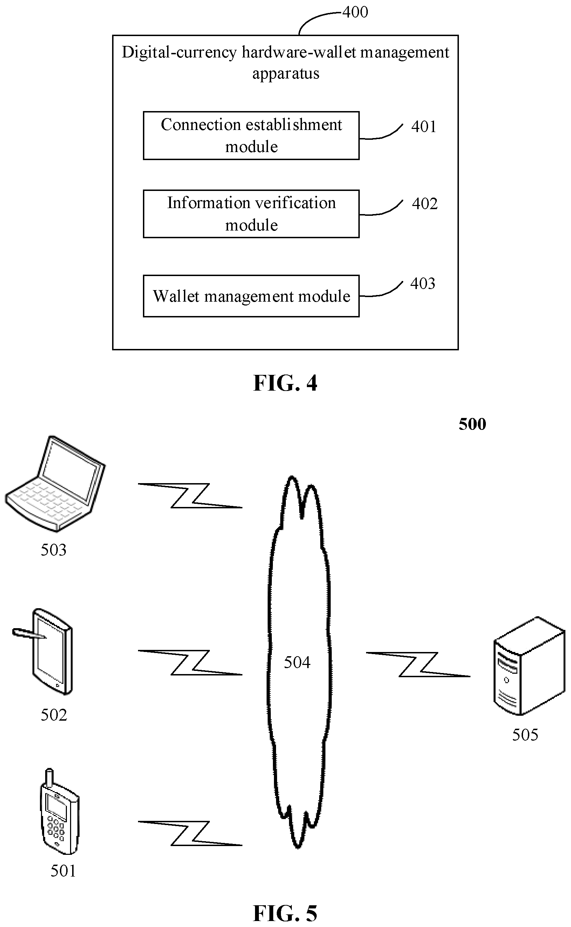

FIG. 4 is a schematic diagram of main modules of a digital-currency hardware-wallet management apparatus according to an embodiment of the present disclosure. As shown in FIG. 4, the digital-currency hardware-wallet management apparatus 400 according to an embodiment of the present disclosure mainly includes a connection establishment module 401, an information verification module 402, and a wallet management module 403.

The connection establishment module 401 is configured to, in response to a digital-currency hardware-wallet management request, establish a communication connection with a user identification card, and acquire first hardware-wallet information corresponding to the user identification card.

The information verification module 402 is configured to perform account-information verification by comparing the first hardware-wallet information with second hardware-wallet information displayed on a page of a digital-currency application.

The wallet management module 403 is configured to, in response to the account-information verification being passed, access a hardware-wallet function management page, and manage a second hardware wallet corresponding to the second hardware-wallet information through the hardware-wallet function management page.

According to an embodiment of the embodiment of the present disclosure, the first hardware-wallet information includes a first hardware-wallet identifier and first hardware-wallet real-name information, and the second hardware-wallet information includes a second hardware-wallet identifier and second hardware-wallet real-name information. The information verification module 402 is further configured to: determine whether the first hardware-wallet identifier is consistent with the second hardware-wallet identifier; in response to the first hardware-wallet identifier being consistent with the second hardware-wallet identifier, determine the account-information verification as being passed; in response to the first hardware-wallet identifier being inconsistent with the second hardware-wallet identifier, determine whether the first hardware-wallet real-name information is consistent with the second hardware-wallet real-name information; in response to the first hardware-wallet real-name information being consistent with the second hardware-wallet real-name information, determine an account-information verification result to be that the user identification card corresponding to the second hardware wallet has been replaced and the second hardware-wallet real-name information remains unchanged; in response to the first hardware-wallet real-name information being inconsistent with the second hardware-wallet real-name information, determine whether the first hardware-wallet real-name information has an affiliation relationship with the second hardware-wallet real-name information; in response to the first hardware-wallet real-name information having the affiliation relationship with the second hardware-wallet real-name information, determine the account-information verification as being passed; and in response to the first hardware-wallet real-name information not having the affiliation relationship with the second hardware-wallet real-name information, determine the account-information verification result to be that the second hardware-wallet is logged in with a replaced device.

According to another embodiment of the embodiment of the present disclosure, the wallet management module 403 may be further configured to, in response to the account-information verification result being that the user identification card corresponding to the second hardware-wallet has been replaced and the second hardware-wallet real-name information remains unchanged, prompt a user to delete the second hardware-wallet.

According to another embodiment of the embodiment of the present disclosure, the wallet management module 403 may be further configured to: in response to receiving an instruction of deleting the second hardware wallet, acquire payment information of the second hardware wallet for verification; and send, in response to the verification being passed, a request for deleting the second hardware wallet to a wallet issuing institution to delete the second hardware wallet through the wallet issuing institution.

According to another embodiment of the embodiment of the present disclosure, the wallet management module 403 may be further configured to: in response to the account-information verification result being that the second hardware wallet is logged in with a replaced device, determine whether a small-amount password-free payment function of the second hardware wallet is enabled; and in response to determining that the small-amount password-free payment function of the second hardware wallet is enabled, prompt a user to disable the small-amount password-free payment function of the second hardware wallet.

According to another embodiment of the embodiment of the present disclosure, the wallet management module 403 may be further configured to send, in response to receiving an instruction of disabling the small-amount password-free payment function of the second hardware wallet, a request for disabling the small-amount password-free payment function to a wallet issuing institution to disable the small-amount password-free payment function of the second hardware wallet through the wallet issuing institution.

According to another embodiment of the embodiment of the present disclosure, the wallet management module 403 may be further configured to access, after prompting a user to disable the small-amount password-free payment function of the second hardware wallet, the hardware-wallet function management page, and managing the second hardware wallet through the hardware-wallet function management page.

According to another embodiment of the embodiment of the present disclosure, the wallet management module 403 may be further configured to: check whether a mandatory update of the digital-currency application is available via a trusted service manager; and in response to the mandatory update of the digital-currency application being available, prompt a user to perform application updating and confirm that the digital-currency application has been updated successfully.

According to another embodiment of the embodiment of the present disclosure, the wallet management module 403 may be further configured to: manage the second hardware wallet through the hardware-wallet function management page to performing one or more of the following operations: payment limit setting, password management, hardware-wallet name modification, hardware-wallet loss reporting and loss-report cancellation function, and hardware-wallet deletion.

According to another embodiment of the embodiment of the present disclosure, the connection establishment module 401 may be further configured to perform, for a first type of operating system, command communication with the user identification card through an open mobile interface of a device-card channel of the operating system to establish the communication connection; and perform, for a second type of operating system, command communication with the user identification card through a Bluetooth channel protocol provided by an operator to establish the communication connection.

According to another embodiment of the embodiment of the present disclosure, the information verification module 402 may be further configured to: for the second type of operating system, determine, in response to failing to establish a communication connection with the user identification card, the account-information verification result to be that the second hardware wallet is logged in with a replaced device.

According to the technical solution of the embodiment of the present disclosure, a communication connection is established with a user identification card, in response to a digital-currency hardware-wallet management, and first hardware-wallet information corresponding to the user identification card is acquired; the first hardware-wallet information is compared with second hardware-wallet information displayed on a page of a digital-currency application to perform account-information verification; and in response to the account-information verification being passed, a hardware-wallet function management page is accessed, and a second hardware wallet corresponding to the second hardware-wallet information is managed through the hardware-wallet function management page. The embodiment performs account-consistency verification and management on a hardware wallet on the basis of information related to a user identification card used as a hardware carrier of a digital-currency hardware wallet, thereby simplifying the manner for managing the digital-currency hardware wallet and improving the security of managing and using the hardware wallet.

FIG. 5 is an exemplary system architecture diagram 500 in which the digital-currency hardware-wallet management method or the digital-currency hardware-wallet management apparatus according to the embodiment of the present disclosure may be applied.

As shown in FIG. 5, the system architecture 500 may include terminal devices 501, 502, 503, a network 504 and a server 505. The network 504 is a medium configured to provide communication links among the terminal devices 501, 502, 503 and the server 505. The network 504 may include various connection types, such as wired communication links, wireless communication links, fiber optic cables, or the like.

The terminal devices 501, 502, and 503 may be used by the user to interact with the server 505 through the network 504, to receive or transmit a message, and the like. The terminal devices 501, 502, and 503 may have various communication client applications installed thereon, such as a shopping application, a web browser application, a search application, an instant messaging tool, a digital-currency application, or the like (as examples only).

The terminal devices 501, 502, and 503 may be various electronic devices that have a display screen and support web browsing, including but not limited to smart phones, tablet computers, laptop computers, desktop computers, or the like.

The server 505 may provide various services, for example, a backend management server (as an example only) that supports websites browsed by a user via the terminal devices 501, 502, and 503. The backend management server may respond to the received product information query request and other data. In response to a digital-currency hardware-wallet management request, a communication connection is established with the user identification card and first hardware-wallet information corresponding to the user identification card is acquired. The first hardware-wallet information is compared with second hardware-wallet information displayed on the page of a digital-currency application to perform account-information verification. In response to the account-information verification being passed, a hardware-wallet function management page is accessed, and a second hardware wallet corresponding to the second hardware-wallet information is managed through the hardware-wallet function management page, and a processing result (for example, a management operation result, merely as an example) is returned to the terminal device.

It should be noted that the digital-currency hardware-wallet management method provided by the embodiment of the present disclosure is generally executed by the server 505. Correspondingly, the digital-currency hardware-wallet management apparatus is generally arranged in the server 505.

It should be understood that the number of terminal devices, networks and servers shown in FIG. 5 are illustrative only. Depending on implementation needs, any number of terminal devices, networks, and servers may be provided.

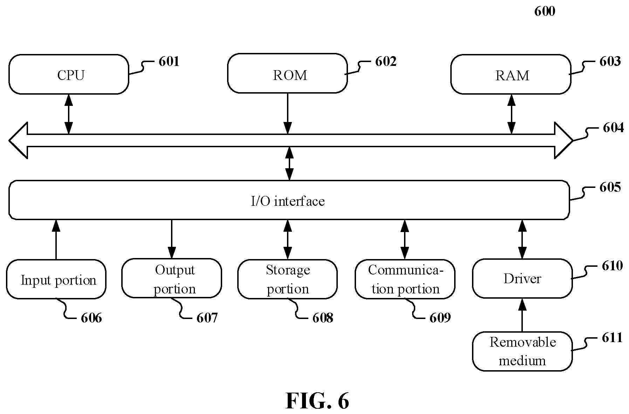

Reference is made to FIG. 6, which is a schematic structural diagram of a computer system 600 of a terminal device or server suitable for implementing an embodiment of the present disclosure. The terminal device or server shown in FIG. 6 is only an example, and should not be a limitation to a function or usage scope of the embodiments of the present disclosure.

As shown in FIG. 6, the computing system 600 includes a central processing unit (CPU) 601, which may execute various appropriate actions and processes according to a program stored in a read-only memory (ROM) 602 or a program loaded from a storage portion 608 to a random-access memory (RAM) 603. The RAM 603 also has various programs and data for operation of the system 600 stored thereon. The CPU 601, the ROM 602 and the RAM 603 are connected to each other via a bus 604. An input/output (I/O) interface 605 is also connected to the bus 604.

The following components are connected to the I/O interface 605: an input portion 606 including a keyboard, a mouse, and the like; an output portion 607 including a cathode ray tube (CRT), a liquid crystal display (LCD), a speaker, and the like; a storage portion 608 including a hard disk, and the like; and a communication portion 609 including a network interface card, such as a LAN card, a modem, and the like. The communication portion 609 performs communication processing via a network, such as the Internet. A driver 610 may be connected to the I/O interface 605 as needed. A removable medium 611, such as a magnetic disk, an optical disk, a magnetic optical disk, a semiconductor memory, or the like, is installed on the driver 610 as required, so that a computer program read therefrom is installed on the storage portion 608 as required.

Particularly, according to an embodiment of the present disclosure, the foregoing process described with reference to the flow chart may be implemented as a computer software program. For example, according to an embodiment of the present disclosure, a computer program product including a computer program carried on a computer-readable medium is provided. The computer program includes program codes for performing the method shown in the flow chart. In such an embodiment, the computer program may be downloaded and installed from a network via the communication portion 609, and/or may be installed from the removable medium 611. When the computer program is executed by the central processing unit (CPU) 601, the functions defined in the system of the present disclosure are executed.

It should be noted that the computer-readable medium shown in the present disclosure may be a computer-readable signal medium or a computer-readable storage medium, or any combination thereof. The computer-readable storage medium may include, but is not limited to, a system, an apparatus, or a device in an electronic, magnetic, optical, electromagnetic, infrared, or semi-conductive form, or any combination thereof. More specific examples of the computer-readable storage medium may include, but are not limited to, an electrical connection with one or more wires, a portable computer disk, a hard disk, a random-access memory (RAM), a read-only memory (ROM), an erasable programmable read-only memory (EPROM or a flash memory), an optical fiber, a portable compact disc read-only memory (CD-ROM), an optical storage device, a magnetic storage device or any suitable combination thereof. In the present disclosure, the computer-readable storage medium may be any tangible medium including or storing a program, and the program may be used by or in combination with an instruction execution system, apparatus, or device. In the present disclosure, a computer-readable signal medium may include a data signal propagated in baseband or as part of a carrier wave. The data signal carries computer-readable program codes. The propagated data signal may be in various forms, including but not limited to an electromagnetic signal, an optical signal or any suitable combination thereof. The computer-readable signal medium may further be any computer-readable medium other than the computer-readable storage medium. The computer-readable medium is configured to send, propagate, or transmit a program to be used by a system, an apparatus, or a device capable of executing instructions or a program used in conjunction with the system, apparatus or device. The program codes included in the computer-readable medium may be transmitted using any suitable medium, including but not limited to a wireless medium, a wire, an optical fiber cable, an RF or the like, or any suitable combination of the above.

Flowcharts and block diagrams in the drawings illustrate architectures, functions and operations that can be implemented by the system, method and computer program product according to the embodiments of the present disclosure. Each block in the flow charts or the block diagrams may represent a module, a program segment, or a portion of codes. The module, the program segment, or the portion of codes includes one or more executable instructions for implementing a specified logical function. It should be noted that, in some alternative implementations, the functions marked in blocks may be performed in an order different from the order shown in the drawings. For example, two blocks shown in succession may actually be executed in parallel, or sometimes may be executed in a reverse order, which depends on functions involved. It should be noted that each of the blocks in the block diagrams and/or the flowcharts and a combination of blocks in the block diagrams and/or the flowcharts may be implemented by using a dedicated hardware-based system for performing specified functions or operations, or may be implemented by using a combination of dedicated hardware and computer instructions.

The units or modules mentioned in the description of the embodiments of the present disclosure may be implemented by means of software, or may be implemented by means of hardware. The units or modules described may be arranged in the processor. For example, the following may be described: a processor including a connection establishing module, an information verification module, and a wallet management module. The names of these units or modules do not necessarily constitute limitations on the units or modules themselves. For instance, the connection establishing module may alternatively be described as a module configured to, in response to a digital-currency hardware-wallet management, establish a communication connection with a user identification card and acquire first hardware-wallet information corresponding to the user identification card.

In another aspect, a computer-readable medium is further provided in the present disclosure. The computer-readable medium may be included in the device described in the foregoing embodiments, or may be standalone, rather than being assembled in the electronic device. The computer-readable medium carries one or more programs. The one or more programs, when executed by the device, cause the device to implement: in response to a digital-currency hardware-wallet management request, establishing a communication connection with a user identification card, and acquiring first hardware-wallet information corresponding to the user identification card; performing account-information verification by comparing the first hardware-wallet information with second hardware-wallet information displayed on a page of a digital-currency application; and in response to the account-information verification being passed, accessing a hardware-wallet function management page, and managing a second hardware wallet corresponding to the second hardware-wallet information through the hardware-wallet function management page.

According to the technical solution of the embodiment of the present disclosure, a communication connection is established with a user identification card, in response to a digital-currency hardware-wallet management, and first hardware-wallet information corresponding to the user identification card is acquired; the first hardware-wallet information is compared with second hardware-wallet information displayed on a page of a digital-currency application to perform account-information verification; and in response to the account-information verification being passed, a hardware-wallet function management page is accessed, and a second hardware wallet corresponding to the second hardware-wallet information is managed through the hardware-wallet function management page. The embodiment performs account-consistency verification and management on a hardware wallet on the basis of information related to a user identification card used as a hardware carrier of a digital-currency hardware wallet, thereby simplifying the manner for managing the digital-currency hardware wallet and improving the security of managing and using the hardware wallet.

The above specific embodiments are not intended to limit the protection scope of the present disclosure. It should be understood by those skilled in the art that various modifications, combinations, sub combinations and alternations may be made depending on a design requirement and other factors. Any modification, equivalent substitution and improvement made within the spirit and principle of the present disclosure should be included in the protection scope of the present disclosure.

### Industrial applicability

The technical solution provided according to the embodiment of the present disclosure may be applied to the technical field of computers. In the embodiment of the present disclosure, a communication connection is established with a user identification card, in response to a digital-currency hardware-wallet management, and first hardware-wallet information corresponding to the user identification card is acquired; the first hardware-wallet information is compared with second hardware-wallet information displayed on a page of a digital-currency application to perform account-information verification; and in response to the account-information verification being passed, a hardware-wallet function management page is accessed, and a second hardware wallet corresponding to the second hardware-wallet information is managed through the hardware-wallet function management page. The embodiment performs account-consistency verification and management on a hardware wallet on the basis of information related to a user identification card used as a hardware carrier of a digital-currency hardware wallet, thereby simplifying the manner for managing the digital-currency hardware wallet and improving the security of managing and using the hardware wallet.

## Claims

1. A digital-currency hardware-wallet management method, comprising:
in response to a digital-currency hardware-wallet management request, establishing a communication connection with a user identification card, and acquiring first hardware-wallet information corresponding to the user identification card;
performing account-information verification by comparing the first hardware-wallet information with second hardware-wallet information displayed on a page of a digital-currency application; and
in response to the account-information verification being passed, accessing a hardware-wallet function management page, and managing a second hardware wallet corresponding to the second hardware-wallet information through the hardware-wallet function management page.

2. The method according to claim 1, wherein the first hardware-wallet information comprises a first hardware-wallet identifier and first hardware-wallet real-name information, and the second hardware-wallet information comprises a second hardware-wallet identifier and second hardware-wallet real-name information;
the performing account-information verification by comparing the first hardware-wallet information with second hardware-wallet information displayed on a page of a digital-currency application comprises:
determining whether the first hardware-wallet identifier is consistent with the second hardware-wallet identifier;
in response to the first hardware-wallet identifier being consistent with the second hardware-wallet identifier, determining the account-information verification as being passed;
in response to the first hardware-wallet identifier being inconsistent with the second hardware-wallet identifier, determining whether the first hardware-wallet real-name information is consistent with the second hardware-wallet real-name information;
in response to the first hardware-wallet real-name information being consistent with the second hardware-wallet real-name information, determining an account-information verification result to be that the user identification card corresponding to the second hardware wallet has been replaced and the second hardware-wallet real-name information remains unchanged;
in response to the first hardware-wallet real-name information being inconsistent with the second hardware-wallet real-name information, determining whether the first hardware-wallet real-name information has an affiliation relationship with the second hardware-wallet real-name information;
in response to the first hardware-wallet real-name information having the affiliation relationship with the second hardware-wallet real-name information, determining the account-information verification as being passed; and
in response to the first hardware-wallet real-name information not having the affiliation relationship with the second hardware-wallet real-name information, determining the account-information verification result to be that the second hardware-wallet is logged in with a replaced device.

3. The method according to claim 2, further comprising:
in response to the account-information verification result being that the user identification card corresponding to the second hardware-wallet has been replaced and the second hardware-wallet real-name information remains unchanged, prompting a user to delete the second hardware-wallet.

4. The method according to claim 3, further comprising:
in response to receiving an instruction of deleting the second hardware wallet, acquiring payment information of the second hardware wallet for verification; and
sending, in response to the verification being passed, a request for deleting the second hardware wallet to a wallet issuing institution to delete the second hardware wallet through the wallet issuing institution.

5. The method according to claim 2, further comprising:
in response to the account-information verification result being that the second hardware wallet is logged in with a replaced device, determining whether a small-amount password-free payment function of the second hardware wallet is enabled; and
in response to determining that the small-amount password-free payment function of the second hardware wallet is enabled, prompting a user to disable the small-amount password-free payment function of the second hardware wallet.

6. The method according to claim 5, further comprising:
sending, in response to receiving an instruction of disabling the small-amount password-free payment function of the second hardware wallet, a request for disabling the small-amount password-free payment function to a wallet issuing institution to disable the small-amount password-free payment function of the second hardware wallet through the wallet issuing institution.

7. The method according to claim 5, wherein after the prompting a user to disable the small-amount password-free payment function of the second hardware wallet, the method further comprises:
accessing the hardware-wallet function management page, and managing the second hardware wallet through the hardware-wallet function management page.

8. The method according to claim 1, wherein before accessing the hardware-wallet function management page, the method further comprises:
checking whether a mandatory update of the digital-currency application is available via a trusted service manager; and
in response to the mandatory update of the digital-currency application being available, prompting a user to perform application updating and confirming that the digital-currency application has been updated successfully.

9. The method according to claim 1 or 7, wherein the managing the second hardware wallet through the hardware-wallet function management page comprises:
managing the second hardware wallet through the hardware-wallet function management page to performing one or more of the following operations: payment limit setting, password management, hardware-wallet name modification, hardware-wallet loss reporting and loss-report cancellation function, and hardware-wallet deletion.

10. The method according to claim 1, wherein the establishing a communication connection with a user identification card comprises:
performing, for a first type of operating system, command communication with the user identification card through an open mobile interface of a device-card channel of the operating system to establish the communication connection; and
performing, for a second type of operating system, command communication with the user identification card through a Bluetooth channel protocol provided by an operator to establish the communication connection.

11. The method according to claim 10, further comprising:
for the second type of operating system, determining, in response to failing to establish a communication connection with the user identification card, the account-information verification result to be that the second hardware wallet is logged in with a replaced device.

12. A digital-currency hardware-wallet management apparatus, comprising:
a connection establishment module, configured to, in response to a digital-currency hardware-wallet management request, establish a communication connection with a user identification card, and acquire first hardware-wallet information corresponding to the user identification card;
an information verification module, configured to perform account-information verification by comparing the first hardware-wallet information with second hardware-wallet information displayed on a page of a digital-currency application; and
a wallet management module, configured to, in response to the account-information verification being passed, access a hardware-wallet function management page, and manage a second hardware wallet through the hardware-wallet function management page.

13. An electronic device, comprising:
one or more processors;
a memory, configured to store one or more programs, wherein
the one or more programs, when executed by the one or more processors, cause the one or more processors to implement the method according to any one of claims 1 to 11.

14. A computer-readable medium having a computer program stored thereon, wherein the program, when executed by a processor, performs the method according to any one of claims 1 to 11.
